# EUROPEAN PATENT SPECIFICATION

(11) **EP 3 024 263 B1**
(45) Date of publication and mention of the grant of the patent: **20.09.2017**
(21) Application number: 13895117.3
(22) Date of filing: 08.10.2013
(51) Int. Cl.: H04W 16/02

(54) **RESOURCE CONFIGURATION METHOD, NETWORK DEVICE, AND BASE STATION**
RESSOURCENKONFIGURATIONSVERFAHREN, NETZWERKVORRICHTUNG UND BASISSTATION
PROCÉDÉ DE CONFIGURATION DE RESSOURCE, DISPOSITIF DE RÉSEAU ET STATION DE BASE

(43) Date of publication of application: 25.05.2016
(73) Proprietor: Huawei Technologies Co., Ltd., Longgang District Shenzhen, Guangdong 518129 (CN)
(72) Inventor: LI, Jie, Shenzhen Guangdong 518129 (CN)
(74) Representative: Gill Jennings & Every LLP
(86) International application number: PCT/CN2013/084830
(87) International publication number: WO 2015/051491

(56) References cited:
- EP-A1- 2 515 568
- CN-A- 101 060 698
- CN-A- 101 141 802
- CN-A- 101 184 042
- CN-A- 101 459 597
- US-A1- 2007 264 986
- US-A1- 2012 034 942
- US-A1- 2012 284 388

## Description

### TECHNICAL FIELD

The present invention relates to the field of communications technologies, and in particular, to a resource configuration method, a network device, and a base station.

### BACKGROUND

In order to reduce network deployment costs, shorten a network construction cycle, and provide relatively large network coverage within a short time, multiple operators may share a telecommunications network infrastructure such as a site, a tower, or a power supply device, or share a network device such as a base station and a core network, thereby implementing network sharing. Sharing of a radio access network gradually becomes an important sharing technology. During sharing of the radio access network, multiple operators may share a same cell, or multiple operators may share a same base station. In the prior art, each operator generally corresponds to one public land mobile network (Public Land Mobile Network, PLMN), and therefore, in different sharing scenarios, according to different types of resources, resource allocation may be performed by using a PLMN as a granularity. For example, it is assumed that there are two operators; and an operator A corresponds to a PLMN 1, and an operator B corresponds to a PLMN 2. If the PLMN 1 and the PLMN 2 share a same cell, when a cell-level resource is allocated, 40% of the cell-level resource may be configured for the PLMN 1, and 60% of the cell-level resource may be configured for the PLMN 2; and the base station allocates a resource to user equipment (User Equipment, UE) according to a resource proportion configured for each PLMN.

When a resource is configured, by using a PLMN as a granularity, for operators sharing a network, a case in which resources of some PLMNs are remained and resources of some PLMNs are in short supply inevitably exists, leading to low network resource utilization.

US 2012/0034942 relates to base station sharing. US 2007/0264986 relate to method and device for managing resources shared by different operators in a communication system. EP 2515568 relates to method and device for sharing ABIS resources. US 2012/0284388 relates to method and device for operating resource on shared network element.

### SUMMARY

Embodiments of the present invention provide resource configuration methods as set forth in claims 5 and 7, a network device as set forth in claim 1, and a base station as set forth in claim 3, so as to resolve a problem in the prior art that resource utilization is low in a resource configuration manner in network sharing.

To resolve the foregoing technical problem, the embodiments of the present invention disclose the following technical solutions:
According to a first aspect, a network device is provided, where the network device implements resource configuration based on network sharing, and the network device includes:
   a generating unit, configured to generate a resource configuration command, where the resource configuration command includes at least one public land mobile network PLMN group and a resource proportion of a configuration resource of the at least one PLMN group to an entire wireless network resource, where the at least one PLMN group includes a first PLMN group, and the first PLMN group includes at least two PLMNs; and
   a delivering unit, configured to deliver the resource configuration command generated by the generating unit to a base station, so that the base station allocates a resource to each PLMN according to the resource proportion of the at least one PLMN group.

The generating unit is configured to generate the resource configuration command, where the resource configuration command further includes a resource proportion of a configuration resource of a first PLMN in the first PLMN group to the entire wireless network resource, so that the base station allocates a resource to the first PLMN according to the resource proportion of the first PLMN.

The generating unit is configured to generate the resource configuration command, where the resource configuration command further includes resource proportions of different types of resources in the configuration resource of the first PLMN to the entire wireless network resource, where the different types of resources include a sharing resource that the first PLMN shares with another PLMN.

With reference to the first aspect, in a first possible implementation manner of the first aspect, the generating unit is configured to generate the resource configuration command, where the resource configuration command further includes a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

According to a second aspect, a base station is provided, where the base station implements resource configuration based on network sharing, and the base station includes:
a receiving unit, configured to receive a resource configuration command delivered by a network device, where the resource configuration command includes a group identifier of at least one PLMN group and a resource proportion of a configuration resource of the at least one PLMN group to an entire wireless network resource, where the at least one PLMN group includes a first PLMN group, and the first PLMN group includes at least two PLMNs; and
an allocating unit, configured to allocate a resource to each PLMN according to the resource proportion of the at least one PLMN group in the resource configuration command received by the receiving unit.

The receiving unit is configured to receive the resource configuration command, where the resource configuration command further includes a resource proportion of a configuration resource of a first PLMN in the first PLMN group to the entire wireless network resource; and
the allocating unit is specifically configured to allocate a resource to the first PLMN according to the resource proportion of the first PLMN in the first PLMN group; and/or share, when there is a remaining resource in the configuration resource of the first PLMN, the remaining resource of the first PLMN with another PLMN in the first PLMN group except the first PLMN.

The receiving unit is configured to receive the resource configuration command, where the resource configuration command further includes resource proportions of different types of resources in the configuration resource of the first PLMN to the entire wireless network resource, where the different types of resources include a sharing resource that the first PLMN shares with another PLMN.

The allocating unit is further configured to share, by the base station when there is a remaining resource in the configuration resource of the first PLMN group, the remaining resource of the first PLMN group with another PLMN group.

With reference to the second aspect, in a first possible implementation manner of the second aspect, the receiving unit is configured to receive the resource configuration command, where the resource configuration command further includes a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

According to a third aspect, a resource configuration method is provided, where the resource configuration method is based on network sharing, and the method includes:
generating, by a network device, a resource configuration command, where the resource configuration command includes at least one public land mobile network PLMN group and a resource proportion of a configuration resource of the at least one PLMN group to an entire wireless network resource, where the at least one PLMN group includes a first PLMN group, and the first PLMN group includes at least two PLMNs; and
delivering, by the network device, the resource configuration command to a base station, so that the base station allocates a resource to each PLMN according to the resource proportion of the at least one PLMN group.

The resource configuration command further includes a resource proportion of a configuration resource of a first PLMN in the first PLMN group to the entire wireless network resource, so that the base station allocates a resource to the first PLMN according to the resource proportion of the first PLMN.

The resource configuration command further includes resource proportions of different types of resources in the configuration resource of the first PLMN to the entire wireless network resource, where the different types of resources include a sharing resource that the first PLMN shares with another PLMN.

With reference to the third aspect, in a first possible implementation manner of the third aspect, when a PLMN in the first PLMN group shares a wireless network resource of the base station, the resource configuration command further includes a base station identifier of the base station; or
when a PLMN in the first PLMN group shares a wireless network resource of a cell, the resource configuration command further includes a cell identifier of the cell and a base station identifier of a base station to which the cell belongs.

According to a fourth aspect, a resource configuration method is provided, where the resource configuration method is based on network sharing, and the method includes:
receiving, by a base station, a resource configuration command delivered by a network device, where the resource configuration command includes a group identifier of at least one PLMN group and a resource proportion of a configuration resource of the at least one PLMN group to an entire wireless network resource, where the at least one PLMN group includes a first PLMN group, and the first PLMN group includes at least two PLMNs; and
allocating, by the base station, a resource to each PLMN according to the resource proportion of the at least one PLMN group.

The resource configuration command further includes a resource proportion of a configuration resource of a first PLMN in the first PLMN group to the entire wireless network resource; and
the allocating, by the base station, a resource to each PLMN according to the resource proportion of the at least one PLMN group includes:
allocating, by the base station, a resource to the first PLMN according to the resource proportion of the first PLMN in the first PLMN group; and/or
sharing, when there is a remaining resource in the configuration resource of the first PLMN, the remaining resource of the first PLMN with another PLMN in the first PLMN group except the first PLMN.

The resource configuration command further includes resource proportions of different types of resources in the configuration resource of the first PLMN to the entire wireless network resource, where the different types of resources include a sharing resource that the first PLMN shares with another PLMN.

The method further includes: sharing, by the base station when there is a remaining resource in the configuration resource of the first PLMN group, the remaining resource of the first PLMN group with another PLMN group.

With reference to the fourth aspect, in a first possible implementation manner, when a PLMN in the first PLMN group shares a wireless network resource of the base station, the resource configuration command further includes a base station identifier of the base station; or
when a PLMN in the first PLMN group shares a wireless network resource of a cell, the resource configuration command further includes a cell identifier of the cell and a base station identifier of a base station to which the cell belongs.

In the embodiments of the present invention, a network device generates a resource configuration command, where the resource configuration command includes a group identifier of at least one PLMN group and a resource proportion of a configuration resource of each PLMN group to an entire wireless network resource, where each PLMN group includes at least two PLMNs; the network device delivers the resource configuration command to a base station; and the base station allocates a resource to each PLMN according to the resource proportion of the at least one PLMN group. In the embodiments of the present invention, resource allocation can be performed by using a PLMN group as a granularity, so that after obtaining a resource allocated to each PLMN group, a base station allocates a resource of each PLMN group to at least two PLMNs in the PLMN group as a whole. Compared with the prior art that a fixed resource proportion is configured for each PLMN, in the embodiments of the present invention, PLMNs in a same PLMN group can freely use a resource of the PLMN group, so as to avoid a case in which resources of some PLMNs are remained, and resources of some PLMNs are in short supply, so that at least two PLMNs in the PLMN group can share the resource of the PLMN group, thereby increasing flexibility of resource configuration and improving resource utilization.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of an embodiment of a resource configuration method according to the present invention;
FIG. 2 is a flowchart of another embodiment of a resource configuration method according to the present invention;
FIG. 3 is a flowchart of another embodiment of a resource configuration method according to the present invention;
FIG. 4 is a block diagram of an embodiment of a network device according to the present invention;
FIG. 5 is a block diagram of another embodiment of a network device according to the present invention;
FIG. 6 is a block diagram of an embodiment of a base station according to the present invention; and
FIG. 7 is a block diagram of another embodiment of a base station according to the present invention.

### DESCRIPTION OF EMBODIMENTS

To make a person skilled in the art better understand the technical solutions in the embodiments of the present invention, and make the foregoing objectives, features, and advantages of the embodiments of the present invention clearer, the following further describes the technical solutions in the embodiments of the present invention in detail with reference to the accompanying drawings.

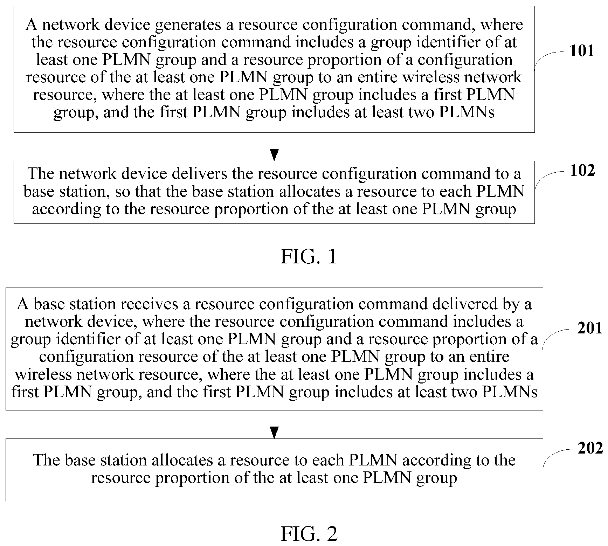

Refer to FIG. 1, which is a flowchart of an embodiment of a resource configuration method according to the present invention. In this embodiment, a resource configuration process is described from a network device side:
Step 101: A network device generates a resource configuration command, where the resource configuration command includes a group identifier of at least one PLMN group and a resource proportion of a configuration resource of the at least one PLMN group to an entire wireless network resource, where the at least one PLMN group includes a first PLMN group, and the first PLMN group includes at least two PLMNs.

In this embodiment of the present invention, the network device groups PLMNs according to a cooperative relationship between operators or an ownership between a PLMN and an operator, for example, if an operator has multiple PLMNs or multiple PLMNs of multiple operators have alliance relationships, the multiple PLMNs are grouped into a PLMN group and a group identifier is configured for the PLMN group, so that a resource may be configured for one PLMN group as a whole. For other PLMNs not involving the grouping, resource configuration may be still performed by using a PLMN as a granularity, which is not limited in this embodiment of the present invention.

When the configuration command includes the group identifier of the at least one PLMN group and a resource proportion of a configuration resource of each PLMN group to the entire wireless network resource, at least two PLMNs in each PLMN group can share a resource allocated to the PLMN group. That is, when the at least one PLMN group includes the first PLMN group, the at least two PLMNs in the first PLMN group can freely use a resource allocated to the first PLMN group. A resource is allocated to a first PLMN as long as any PLMN in the first PLMN group needs a resource, provided that a resource allocated to a PLMN in the first PLMN group does not exceed a resource of the first PLMN group.

The resource configuration command may further include a resource proportion of a configuration resource of each PLMN in each PLMN group to the entire wireless network resource, or a resource proportion of a configuration resource of each PLMN in each PLMN group to a configuration resource of the PLMN group. According to the foregoing information included in the configuration command, for the first PLMN group, when there is a remaining resource in a configuration resource of the first PLMN in the first PLMN group, the remaining resource of the first PLMN may be shared with another PLMN in the first PLMN group.

Optionally, no matter whether the resource configuration command includes the resource proportion of the configuration resource of each PLMN in each PLMN group to the entire wireless network resource, when there is a remaining resource in a configuration resource of the PLMN group, the remaining resource of the PLMN group may be shared with another PLMN group. The another PLMN group may be a PLMN group including only one PLMN.

Optionally, no matter whether the resource configuration command includes the resource proportion of the configuration resource of each PLMN in each PLMN group to the entire wireless network resource, the resource configuration command may further include resource proportions of different types of resources in the configuration resource of the PLMN to the entire wireless network resource, where the different types of resources may include an exclusive resource of each PLMN and/or a sharing resource that each PLMN can share with another PLMN.

When a PLMN in each PLMN group shares a wireless network resource of a base station, the resource configuration command may further include a base station identifier of the base station. When a PLMN in each PLMN group shares a wireless network resource of a cell, the resource configuration command may further include a cell identifier of the cell and a base station identifier of a base station to which the cell belongs.

In this embodiment, a type of the entire wireless network resource or a type of a configuration resource may include a physical resource block (Physical Resource Block, PRB) resource, a user quantity resource, a traffic resource, or the like. When a resource is allocated to each PLMN group, resource configuration commands may be separately generated according to different types of the entire wireless network resource. For example, when the entire wireless network resource is a PRB resource, the generated resource configuration command includes a resource proportion of a PRB resource of each PLMN group to an entire PRB resource.

Step 102: The network device delivers the resource configuration command to a base station, so that the base station allocates a resource to each PLMN according to the resource proportion of the at least one PLMN group.

In this embodiment of the present invention, the network device may deliver the resource configuration command to the base station by using an interface between network elements. After receiving the configuration command, the base station may enable, according to the group identifier of the at least one PLMN group and the resource proportion of the configuration resource of each PLMN group to the entire wireless network resource, at least two PLMNs in a PLMN group to share a resource allocated to the PLMN group, that is, when any PLMN in the PLMN group needs a resource, the base station allocates a resource to the PLMN, and at the same time, controls the resource allocated to the PLMN in the PLMN group not to exceed the resource allocated by the network device to the PLMN group.

It can be seen from the foregoing embodiment that, in this embodiment, resource allocation can be performed by using a PLMN group as a granularity, so that after obtaining a resource allocated to each PLMN group, a base station allocates a resource of each PLMN group to at least two PLMNs in the PLMN group as a whole. Compared with the prior art that a fixed resource proportion is configured for each PLMN, in this embodiment of the present invention, PLMNs in a same PLMN group can freely use a resource of the PLMN group, so as to avoid a case in which resources of some PLMNs are remained, and resources of some PLMNs are in short supply, so that at least two PLMNs in the PLMN group can share the resource of the PLMN group, thereby increasing flexibility of resource configuration and improving resource utilization.

Refer to FIG. 2, which is a flowchart of another embodiment of a resource configuration method according to the present invention. In this embodiment, a resource configuration process is described from a base station side:
Step 201: A base station receives a resource configuration command delivered by a network device, where the resource configuration command includes a group identifier of at least one PLMN group and a resource proportion of a configuration resource of the at least one PLMN group to an entire wireless network resource, where the at least one PLMN group includes a first PLMN group, and the first PLMN group includes at least two PLMNs.

In this embodiment of the present invention, in the resource configuration command received by the base station, a resource may be configured for a PLMN group as a whole. For other PLMNs not involving the grouping, resource configuration may be still performed by using a PLMN as a granularity, which is not limited in this embodiment of the present invention.

The resource configuration command may further include a resource proportion of a configuration resource of each PLMN in each PLMN group to the entire wireless network resource, or a resource proportion of a configuration resource of each PLMN in each PLMN group to a configuration resource of the PLMN group. Optionally, no matter whether the resource configuration command includes the resource proportion of the configuration resource of each PLMN in each PLMN group to the entire wireless network resource, the resource configuration command may also include resource proportions of different types of resources in a configuration resource of each PLMN to the entire wireless network resource, where the different types of resources include an exclusive resource of each PLMN and/or a sharing resource that each PLMN can share with another PLMN.

When a PLMN in each PLMN group shares a wireless network resource of the base station, the resource configuration command further includes a base station identifier of the base station. When a PLMN in each PLMN group shares a wireless network resource of a cell, the resource configuration command further includes a cell identifier of the cell and a base station identifier of a base station to which the cell belongs.

In this embodiment, a type of the entire wireless network resource or a type of a configuration resource may include a PRB resource, a user quantity resource, a traffic resource, or the like. When a resource is allocated to each PLMN group, resource configuration commands may be separately generated according to different types of the entire wireless network resource.

Step 202: The base station allocates a resource to each PLMN according to the resource proportion of the at least one PLMN group.

When the resource configuration command in step 201 includes the group identifier of the at least one PLMN group and a resource proportion of a configuration resource of each PLMN group to the entire wireless network resource, when allocating a resource, the base station makes at least two PLMNs in a PLMN group share a resource allocated to the PLMN group, that is, when any PLMN in the PLMN group needs a resource, the base station allocates a resource to the PLMN, and at the same time, controls the resource allocated to the PLMN in the PLMN group not to exceed the resource allocated by the network device to the PLMN group.

When the resource configuration command in step 201 further includes a resource proportion of a configuration resource of each PLMN in each PLMN group to the entire wireless network resource, or a resource proportion of a configuration resource of each PLMN in each PLMN group to a configuration resource of the PLMN group, when the base station allocates a resource, when there is a remaining resource in a configuration resource of a PLMN, the base station may allocate the remaining resource of the PLMN to another PLMN that belongs to a same PLMN group as the PLMN.

No matter whether the resource configuration command in step 201 includes the resource proportion of the configuration resource of each PLMN in each PLMN group to the entire wireless network resource, when there is a remaining resource in the configuration resource of the PLMN group, the base station may share the remaining resource of the PLMN group with another PLMN group. The another PLMN group may be a PLMN group including only one PLMN.

It can be seen from the foregoing embodiment that, in this embodiment, resource allocation can be performed by using a PLMN group as a granularity, so that after obtaining a resource allocated to each PLMN group, a base station allocates a resource of each PLMN group to at least two PLMNs in the PLMN group as a whole. Compared with the prior art that a fixed resource proportion is configured for each PLMN, in this embodiment of the present invention, PLMNs in a same PLMN group can freely use a resource of the PLMN group, so as to avoid a case in which resources of some PLMNs are remained, and resources of some PLMNs are in short supply, so that at least two PLMNs in the PLMN group can share the resource of the PLMN group, thereby increasing flexibility of resource configuration and improving resource utilization.

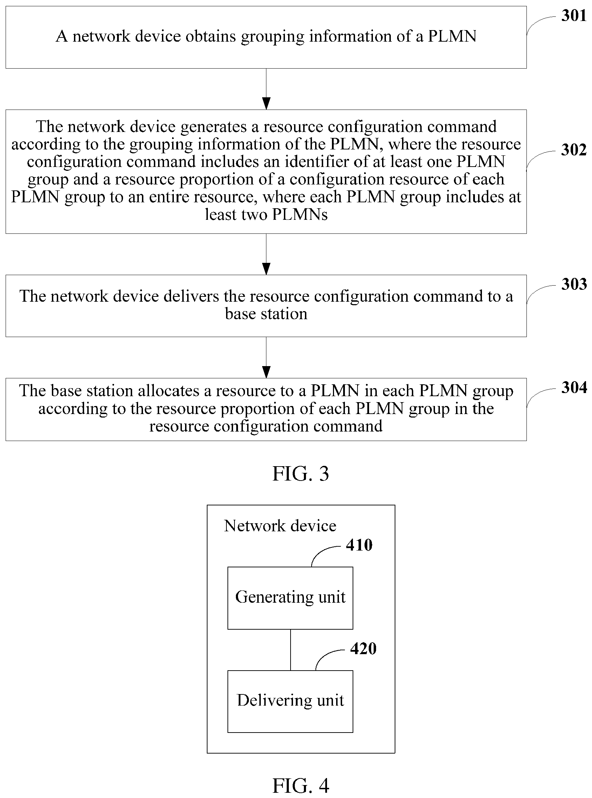

Refer to FIG. 3, which is a flowchart of another embodiment of a resource configuration method according to the present invention. In this embodiment, a resource configuration process is described through interaction between a network device and a base station:
Step 301: A network device obtains grouping information of a PLMN.

In this embodiment of the present invention, PLMNs may be grouped according to an ownership between a PLMN and an operator, for example, if an operator has multiple PLMNs or multiple PLMNs of multiple operators have alliance relationships, the multiple PLMNs may be grouped into a PLMN group and a group identifier is configured for the PLMN group, so that a resource is configured for one PLMN group as a whole. For other PLMNs not involving the grouping, resource configuration may be still performed by using a PLMN as a granularity, which is not limited in this embodiment of the present invention.

Step 302: The network device generates a resource configuration command according to the grouping information of the PLMN, where the resource configuration command includes an identifier of at least one PLMN group and a resource proportion of a configuration resource of each PLMN group to an entire wireless network resource, where each PLMN group includes at least two PLMNs.

In this embodiment, it is assumed that there are four PLMNs in total, which separately are a PLMN 1, a PLMN 2, a PLMN 3, and a PLMN 4, where the PLMN 1 and the PLMN 2 are grouped into a GROUP 1. The network device may perform resource configuration according to the foregoing grouping situation, where a configuration resource of the GROUP 1 accounts for 50% of the entire wireless network resource, a configuration resource of the PLMN 3 accounts for 25% of the entire wireless network resource, and a configuration resource of the PLMN 4 accounts for 25% of the entire wireless network resource. According to the foregoing resource configuration result, the PLMN 1 and the PLMN 2 in the GROUP 1 may share 50% of the entire wireless network resource. A type of the entire wireless network resource or a type of a configuration resource may include a PRB resource, a user quantity resource, a traffic resource, or the like. In the foregoing example, for the PLMN 3 and the PLMN 4 that exist independently, grouping processing may not be performed on the PLMN 3 and the PLMN 4, or each of the PLMN 3 and the PLMN 4 may be grouped into a group, which is not limited in this embodiment of the present invention. A resource configuration process of a PLMN that exists independently is consistent with that in the prior art, which is not described in detail herein again.

In this embodiment, the resource configuration command may further include a resource proportion of a configuration resource of each PLMN in each PLMN group to the entire wireless network resource, for example, in the foregoing GROUP 1, a proportion of a configuration resource of the PLMN 1 to the entire wireless network resource may be further configured to 25%, and a proportion of a configuration resource of the PLMN 2 to the entire wireless network resource may be further configured to 25%. When there is a remaining resource in a configuration resource of one PLMN, the remaining resource of the PLMN may be shared with another PLMN that belongs to a same PLMN group as the PLMN. When there is a remaining resource in a configuration resource of one PLMN group, the remaining resource of the PLMN group may be shared with another PLMN group or another PLMN. For example, it is assumed that the PLMN 1 in the GROUP 1 uses 20% of a configuration resource, remaining 5% of the configuration resource may be preferentially shared with the PLMN 2 for use; and if the PLMN 2 also has a remaining configuration resource, the remaining configuration resource may be shared with the PLMN 3 or the PLMN 4 for use.

In this embodiment, the resource configuration command may further include resource proportions of different types of resources in a configuration resource of each PLMN to the entire wireless network resource, where the different types of resources may include an exclusive resource of each PLMN and/or a sharing resource that each PLMN can share with another PLMN. An exclusive resource of a PLMN refers to a configuration resource that can only be used by the PLMN and cannot be shared with any other GROUPs or PLMNs for use. A sharing resource of a PLMN refers to a configuration resource that can be shared with another GROUP or another PLMN for use in a case in which the configuration resource is not used up by the PLMN. For example, for the PLMN 1 in the foregoing GROUP 1, it is assumed that an exclusive resource in the configuration resource of the PLMN 1 accounts for 5% of the entire wireless network resource, and a sharing resource accounts for 20%; and an exclusive resource in the configuration resource of the PLMN 2 accounts for 10% of the entire wireless network resource, and a sharing resource accounts for 15%, and then, in a configuration resource allocated to the GROUP 1 and accounting for 50% of the entire wireless network resource, a maximum proportion of a configuration resource that can be actually used by the PLMN 1 to the entire wireless network resource is 40% (5% + 20% + 15%), and a maximum proportion of a configuration resource that can be actually used by the PLMN 2 to the entire wireless network resource is 45% (10% + 15% + 20%).

In this embodiment, when PLMNs in each PLMN group share a wireless network resource of a same base station, for example, the wireless network resource may be a quantity of accessed users, traffic, or the like, the resource configuration command may further include a base station identifier of the same base station. When PLMNs in each PLMN group share a wireless network resource of a same cell, for example, the wireless network resource may be a PRB resource, or the like, the resource configuration command may further include a cell identifier of the same cell and a base station identifier of a base station to which the same cell belongs.

Step 303: The network device delivers the resource configuration command to a base station.

In this embodiment of the present invention, the network device may deliver the resource configuration command to the base station by using an interface between network elements. It needs to be illustrated that, in this embodiment, if there are multiple PLMN groups, the network device may add resource configuration information of the multiple PLMN groups to one resource configuration command and deliver the resource configuration command to the base station, or may separately generate a resource configuration command for each PLMN group and separately deliver the resource configuration commands to the base station, which is not limited in this embodiment of the present invention.

Step 304: The base station allocates a resource to a PLMN in each PLMN group according to the resource proportion of each PLMN group in the resource configuration command.

It can be seen from the foregoing embodiment that, in this embodiment, resource allocation can be performed by using a PLMN group as a granularity, so that after obtaining a resource allocated to each PLMN group, a base station allocates a resource of each PLMN group to at least two PLMNs in the PLMN group as a whole. Compared with the prior art that a fixed resource proportion is configured for each PLMN, in this embodiment of the present invention, PLMNs in a same PLMN group can freely use a resource of the PLMN group, so as to avoid a case in which resources of some PLMNs are remained, and resources of some PLMNs are in short supply, so that at least two PLMNs in the PLMN group can share the resource of the PLMN group, thereby increasing flexibility of resource configuration and improving resource utilization.

The present invention further provides embodiments of a network device and a base station corresponding to the embodiments of the resource configuration method in the present invention.

Refer to FIG. 4, which is a block diagram of an embodiment of a network device according to the present invention.

The network device includes a generating unit 410 and a delivering unit 420.

The generating unit 410 is configured to generate a resource configuration command, where the resource configuration command includes at least one public land mobile network PLMN group and a resource proportion of a configuration resource of the at least one PLMN group to an entire wireless network resource, where the at least one PLMN group includes a first PLMN group, and the first PLMN group includes at least two PLMNs.

The delivering unit 420 is configured to deliver the resource configuration command generated by the generating unit 410 to a base station, so that the base station allocates a resource to each PLMN according to the resource proportion of the at least one PLMN group.

In an optional implementation manner, the generating unit 410 is configured to generate the resource configuration command, where the resource configuration command further includes a resource proportion of a configuration resource of a first PLMN in the first PLMN group to the entire wireless network resource, so that the base station allocates a resource to the first PLMN according to the resource proportion of the first PLMN.

In another optional implementation manner, the generating unit 410 is configured to generate the resource configuration command, where the resource configuration command further includes resource proportions of different types of resources in the configuration resource of the first PLMN to the entire wireless network resource, where the different types of resources include an exclusive resource of the first PLMN and/or a sharing resource that the first PLMN can share with another PLMN.

In another optional implementation manner, the generating unit 410 is configured to generate the resource configuration command, where the resource configuration command further includes a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

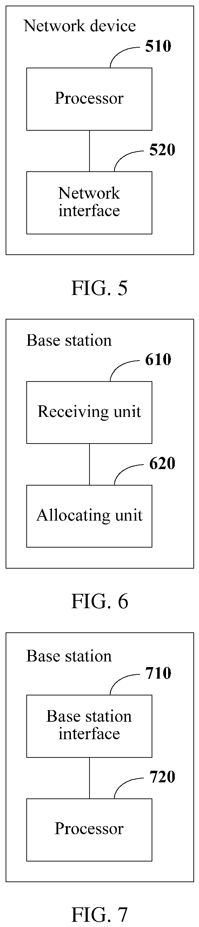

Refer to FIG. 5, which is a block diagram of another embodiment of a network device according to the present invention.

The network device includes a processor 510 and a network interface 520.

The processor 510 is configured to generate a resource configuration command, where the resource configuration command includes at least one public land mobile network PLMN group and a resource proportion of a configuration resource of the at least one PLMN group to an entire wireless network resource, where the at least one PLMN group includes a first PLMN group, and the first PLMN group includes at least two PLMNs.

The network interface 520 is configured to deliver the resource configuration command to a base station, so that the base station allocates a resource to each PLMN according to the resource proportion of the at least one PLMN group.

In an optional implementation manner, the processor 510 is configured to generate the resource configuration command, where the resource configuration command further includes a resource proportion of a configuration resource of a first PLMN in the first PLMN group to the entire wireless network resource, so that the base station allocates a resource to the first PLMN according to the resource proportion of the first PLMN.

In another optional implementation manner, the processor 510 is configured to generate the resource configuration command, where the resource configuration command further includes resource proportions of different types of resources in the configuration resource of the first PLMN to the entire wireless network resource, where the different types of resources include an exclusive resource of the first PLMN and/or a sharing resource that the first PLMN can share with another PLMN.

In another optional implementation manner, the processor 510 is configured to generate the resource configuration command, where the resource configuration command further includes a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

Refer to FIG. 6, which is a block diagram of an embodiment of a base station according to the present invention.

The base station includes a receiving unit 610 and an allocating unit 620.

The receiving unit 610 receives a resource configuration command delivered by a network device, where the resource configuration command includes a group identifier of at least one PLMN group and a resource proportion of a configuration resource of the at least one PLMN group to an entire wireless network resource, where the at least one PLMN group includes a first PLMN group, and the first PLMN group includes at least two PLMNs.

The allocating unit 620 is configured to allocate a resource to each PLMN according to the resource proportion of the at least one PLMN group in the resource configuration command received by the receiving unit 610.

In an optional implementation manner, the receiving unit 610 is configured to receive the resource configuration command, where the resource configuration command further includes a resource proportion of a configuration resource of a first PLMN in the first PLMN group to the entire wireless network resource; and the allocating unit 620 may be specifically configured to allocate a resource to the first PLMN according to the resource proportion of the first PLMN in the first PLMN group; and/or share, when there is a remaining resource in the configuration resource of the first PLMN, the remaining resource of the first PLMN with another PLMN in the first PLMN group except the first PLMN.

In another optional implementation manner, the receiving unit 610 is configured to receive the resource configuration command, where the resource configuration command further includes resource proportions of different types of resources in the configuration resource of the first PLMN to the entire wireless network resource, where the different types of resources include an exclusive resource of the first PLMN and/or a sharing resource that the first PLMN can share with another PLMN.

In another optional implementation manner, the allocating unit 620 may be further configured to share, by the base station when there is a remaining resource in the configuration resource of the first PLMN group, the remaining resource of the first PLMN group with another PLMN group.

In another optional implementation manner, the receiving unit 610 is configured to receive the resource configuration command, where the resource configuration command further includes a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

Refer to FIG. 7, which is a block diagram of another embodiment of a base station according to the present invention.

The base station includes a base station interface 710 and a processor 720.

The base station interface 710 is configured to receive a resource configuration command delivered by a network device, where the resource configuration command includes a group identifier of at least one PLMN group and a resource proportion of a configuration resource of the at least one PLMN group to an entire wireless network resource, where the at least one PLMN group includes a first PLMN group, and the first PLMN group includes at least two PLMNs.

The processor 720 is configured to allocate a resource to each PLMN according to the resource proportion of the at least one PLMN group in the resource configuration command.

In an optional implementation manner, the base station interface 710 is configured to receive the resource configuration command, where the resource configuration command further includes a resource proportion of a configuration resource of a first PLMN in the first PLMN group to the entire wireless network resource; and the processor 720 may be specifically configured to allocate a resource to the first PLMN according to the resource proportion of the first PLMN in the first PLMN group; and/or share, when there is a remaining resource in the configuration resource of the first PLMN, the remaining resource of the first PLMN with another PLMN in the first PLMN group except the first PLMN.

In another optional implementation manner, the base station interface 710 is configured to receive the resource configuration command, where the resource configuration command further includes resource proportions of different types of resources in the configuration resource of the first PLMN to the entire wireless network resource, where the different types of resources include an exclusive resource of the first PLMN and/or a sharing resource that the first PLMN can share with another PLMN.

In another optional implementation manner, the processor 720 may be further configured to share, by the base station when there is a remaining resource in the configuration resource of the first PLMN group, the remaining resource of the first PLMN group with another PLMN group.

In another optional implementation manner, the base station interface 710 is configured to receive the resource configuration command, where the resource configuration command further includes a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

It can be seen from the foregoing embodiments that, in the embodiments of the present invention, a network device generates a resource configuration command, where the resource configuration command includes a group identifier of at least one PLMN group and a resource proportion of a configuration resource of each PLMN group to an entire wireless network resource, where each PLMN group includes at least two PLMNs; the network device delivers the resource configuration command to a base station; and the base station allocates a resource to each PLMN according to the resource proportion of the at least one PLMN group. In the embodiments of the present invention, resource allocation can be performed by using a PLMN group as a granularity, so that after obtaining a resource allocated to each PLMN group, a base station allocates a resource of each PLMN group to at least two PLMNs in the PLMN group as a whole. Compared with the prior art that a fixed resource proportion is configured for each PLMN, in the embodiments of the present invention, PLMNs in a same PLMN group can freely use a resource of the PLMN group, so as to avoid a case in which resources of some PLMNs are remained, and resources of some PLMNs are in short supply, so that at least two PLMNs in the PLMN group can share the resource of the PLMN group, thereby increasing flexibility of resource configuration and improving resource utilization.

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The computer software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

The foregoing descriptions are implementation manners of the present invention, but are not intended to limit the protection scope of the present invention. Any modification, equivalent replacement, and improvement made without departing from the principle of the present invention shall fall within the protection scope of the present invention.

## Claims

1. A network device, wherein the network device implements resource configuration based on network sharing, wherein the network device comprises:
a generating unit (410), configured to generate a resource configuration command, wherein the resource configuration command comprises at least one public land mobile network, PLMN, group and a resource proportion of a configuration resource of the at least one PLMN group to an entire wireless network resource, wherein the at least one PLMN group comprises a first PLMN group, and the first PLMN group comprises at least two PLMNs; and
a delivering unit (420), configured to deliver the resource configuration command generated by the generating unit to a base station;
wherein, the resource configuration command further comprises a resource proportion of a configuration resource of a first PLMN in the first PLMN group to the entire wireless network resource; and
wherein the resource configuration command further comprises resource proportions of different types of resources in the configuration resource of the first PLMN to the entire wireless network resource, wherein the different types of resources comprise a sharing resource that the first PLMN shares with another PLMN.

2. The network device according to claim 1, wherein the generating unit is configured to generate the resource configuration command, wherein the resource configuration command further comprises a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

3. A base station, wherein the base station implements resource configuration based on network sharing, wherein the base station comprises:
a receiving unit (610), configured to receive a resource configuration command delivered by a network device, wherein the resource configuration command comprises a group identifier of at least one public land mobile network, PLMN, group and a resource proportion of a configuration resource of the at least one PLMN group to an entire wireless network resource, wherein the at least one PLMN group comprises a first PLMN group, and the first PLMN group comprises at least two PLMNs; and
an allocating unit (620), configured to allocate a resource to each PLMN according to the resource proportion of the at least one PLMN group in the resource configuration command received by the receiving unit;
wherein, the receiving unit is configured to receive the resource configuration command, wherein the resource configuration command further comprises a resource proportion of a configuration resource of a first PLMN in the first PLMN group to the entire wireless network resource, and
the allocating unit is specifically configured to allocate a resource to the first PLMN according to the resource proportion of the first PLMN in the first PLMN group; and
the receiving unit is configured to receive the resource configuration command, wherein the resource configuration command further comprises resource proportions of different types of resources in the configuration resource of the first PLMN to the entire wireless network resource, wherein the different types of resources comprise a sharing resource that the first PLMN shares with another PLMN.

4. The base station according to claim 3, wherein the receiving unit is configured to receive the resource configuration command, wherein the resource configuration command further comprises a base station identifier of the base station when a PLMN in the first PLMN group shares a wireless network resource of the base station, or a cell identifier of a cell and a base station identifier of a base station to which the cell belongs when a PLMN in the first PLMN group shares a wireless network resource of the cell.

5. A resource configuration method, wherein the resource configuration method is based on network sharing wherein the method comprises:
generating (101), by a network device, a resource configuration command, wherein the resource configuration command comprises at least one public land mobile network, PLMN, group and a resource proportion of a configuration resource of the at least one PLMN group to an entire wireless network resource, wherein the at least one PLMN group comprises a first PLMN group, and the first PLMN group comprises at least two PLMNs; and
delivering (102), by the network device, the resource configuration command to a base station;
wherein, the resource configuration command further comprises a resource proportion of a configuration resource of a first PLMN in the first PLMN group to the entire wireless network resource; and
the resource configuration command further comprises resource proportions of different types of resources in the configuration resource of the first PLMN to the entire wireless network resource, wherein the different types of resources comprise a sharing resource that the first PLMN shares with another PLMN.

6. The method according to claim 5, wherein
when a PLMN in the first PLMN group shares a wireless network resource of the base station, the resource configuration command further comprises a base station identifier of the base station; or
when a PLMN in the first PLMN group shares a wireless network resource of a cell, the resource configuration command further comprises a cell identifier of the cell and a base station identifier of a base station to which the cell belongs.

7. A resource configuration method, wherein the resource configuration method is based on network sharing, wherein the method comprises:
receiving (201), by a base station, a resource configuration command delivered by a network device, wherein the resource configuration command comprises a group identifier of at least one public land mobile network, PLMN, group and a resource proportion of a configuration resource of the at least one PLMN group to an entire wireless network resource, wherein the at least one PLMN group comprises a first PLMN group, and the first PLMN group comprises at least two PLMNs; and
allocating (202), by the base station, a resource to each PLMN according to the resource proportion of the at least one PLMN group;
wherein, the resource configuration command further comprises a resource proportion of a configuration resource of a first PLMN in the first PLMN group to the entire wireless network resource, and
the allocating, by the base station, a resource to each PLMN according to the resource proportion of the at least one PLMN group comprises:
allocating, by the base station, a resource to the first PLMN according to the resource proportion of the first PLMN in the first PLMN group; and
the resource configuration command further comprises resource proportions of different types of resources in the configuration resource of the first PLMN to the entire wireless network resource, wherein the different types of resources comprise a sharing resource that the first PLMN shares with another PLMN.

8. The resource configuration method according to claim 7, wherein
when a PLMN in the first PLMN group shares a wireless network resource of the base station, the resource configuration command further includes a base station identifier of the base station; or
when a PLMN in the first PLMN group shares a wireless network resource of a cell, the resource configuration command further includes a cell identifier of the cell and a base station identifier of a base station to which the cell belongs.

## Patentansprüche

1. Netzvorrichtung, wobei die Netzvorrichtung Ressourcenkonfiguration basierend auf Netzteilung umsetzt, wobei die Netzvorrichtung umfasst:
eine Erzeugungseinheit (410) eingerichtet zum Erzeugen eines Ressourcenkonfigurationsbefehls, wobei der Ressourcenkonfigurationsbefehl wenigstens eine PLMN-Gruppe (PLMN = Public Land Mobile Network - öffentliches Landmobilfunknetz) und einen Ressourcenanteil einer Konfigurationsressource der wenigstens einen PLMN-Gruppe an einer gesamten drahtlosen Netzressource umfasst, wobei die wenigstens eine PLMN-Gruppe eine erste PLMN-Gruppe umfasst und die erste PLMN-Gruppe wenigstens zwei PLMN umfasst; und
eine Übergabeeinheit (420) eingerichtet zum Übergeben des durch die Erzeugungseinheit erzeugten Ressourcenkonfigurationsbefehls an eine Basisstation; wobei der Ressourcenkonfigurationsbefehl weiterhin einen Ressourcenanteil einer Konfigurationsressource eines ersten PLMN in der ersten PLMN-Gruppe an der gesamten drahtlosen Netzressource umfasst; und
wobei der Ressourcenkonfigurationsbefehl weiterhin Ressourcenanteile unterschiedlicher Arten von Ressourcen in der Konfigurationsressource des ersten PLMN an der gesamten drahtlosen Netzressource umfasst, wobei die unterschiedlichen Arten von Ressourcen eine Teilungsressource umfassen, die das erste PLMN sich mit einem anderen PLMN teilt.

2. Netzvorrichtung nach Anspruch 1, wobei die Erzeugungseinheit eingerichtet ist zum Erzeugen des Ressourcenkonfigurationsbefehls, wobei der Ressourcenkonfigurationsbefehl weiterhin eine Basisstationskennung der Basisstation umfasst, wenn ein PLMN in der ersten PLMN-Gruppe eine drahtlose Netzressource der Basisstation teilt oder eine Zellenkennung einer Zelle und eine Basisstationskennung einer Basisstation, zu der die Zelle gehört, wenn sich ein PLMN in der ersten PLMN-Gruppe eine drahtlose Netzressource der Zelle teilt.

3. Basisstation, wobei die Basisstation Ressourcenkonfiguration basierend auf Netzteilung umsetzt, wobei die Basisstation umfasst:
eine Empfangseinheit (610) eingerichtet zum Empfangen eines durch eine Netzvorrichtung übergebenen Ressourcenkonfigurationsbefehls, wobei der Ressourcenkonfigurationsbefehl eine Gruppenkennung von wenigstens einer PLMN-Gruppe (PLMN = Public Land Mobile Network - öffentliches Landmobilfunknetz) und einen Ressourcenanteil einer Konfigurationsressource der wenigstens einen PLMN-Gruppe an einer gesamten drahtlosen Netzressource umfasst, wobei die wenigstens eine PLMN-Gruppe eine erste PLMN-Gruppe umfasst und die erste PLMN-Gruppe wenigstens zwei PLMN umfasst; und
eine Zuteilungseinheit (620) eingerichtet zum Zuteilen einer Ressource zu jedem PLMN gemäß dem Ressourcenanteil der wenigstens einen PLMN-Gruppe in dem durch die Empfangseinheit empfangenen Ressourcenkonfigurationsbefehl;
wobei die Empfangseinheit eingerichtet ist zum Empfangen des Ressourcenkonfigurationsbefehls, wobei der Ressourcenkonfigurationsbefehl weiterhin einen Ressourcenanteil einer Konfigurationsressource eines ersten PLMN in der ersten PLMN-Gruppe an der gesamten drahtlosen Netzressource umfasst, und die Zuteilungseinheit besonders eingerichtet ist zum Zuteilen einer Ressource zu dem ersten PLMN gemäß dem Ressourcenanteil des ersten PLMN in der ersten PLMN-Gruppe; und
die Empfangseinheit eingerichtet ist zum Empfangen des Ressourcenkonfigurationsbefehls, wobei der Ressourcenkonfigurationsbefehl weiterhin Ressourcenanteile unterschiedlicher Arten von Ressourcen in der Konfigurationsressource des ersten PLMN an der gesamten drahtlosen Netzressource umfasst, wobei die unterschiedlichen Arten von Ressourcen eine Teilungsressource umfassen, die das erste PLMN sich mit einem anderen PLMN teilt.

4. Basisstation nach Anspruch 3, wobei die Empfangseinheit eingerichtet ist zum Empfangen des Ressourcenkonfigurationsbefehls, wobei der Ressourcenkonfigurationsbefehl weiterhin eine Basisstationskennung der Basisstation umfasst, wenn sich ein PLMN in der ersten PLMN-Gruppe eine drahtlose Netzressource der Basisstation teilt oder eine Zellenkennung einer Zelle und eine Basisstationskennung einer Basisstation, zu der die Zelle gehört, wenn sich ein PLMN in der ersten PLMN-Gruppe eine drahtlose Netzressource der Zelle teilt.

5. Ressourcenkonfigurationsverfahren, wobei das Ressourcenkonfigurationsverfahren auf Netzteilung basiert, wobei das Verfahren umfasst:
Erzeugen (101) durch eine Netzvorrichtung eines Ressourcenkonfigurationsbefehls, wobei der Ressourcenkonfigurationsbefehl wenigstens eine PLMN-Gruppe (PLMN = Public Land Mobile Network - öffentliches Landmobilfunknetz) und einen Ressourcenanteil einer Konfigurationsressource der wenigstens einen PLMN-Gruppe an einer gesamten drahtlosen Netzressource umfasst, wobei die wenigstens eine PLMN-Gruppe eine erste PLMN-Gruppe umfasst und die erste PLMN-Gruppe wenigstens zwei PLMN umfasst; und
Übergeben (102) durch die Netzvorrichtung des Ressourcenkonfigurationsbefehls an eine Basisstation;
wobei der Ressourcenkonfigurationsbefehl weiterhin einen Ressourcenanteil einer Konfigurationsressource eines ersten PLMN in der ersten PLMN-Gruppe an der gesamten drahtlosen Netzressource umfasst; und
der Ressourcenkonfigurationsbefehl weiterhin Ressourcenanteile unterschiedlicher Arten von Ressourcen in der Konfigurationsressource des ersten PLMN an der gesamten drahtlosen Netzressource umfasst,
wobei die unterschiedlichen Arten von Ressourcen eine Teilungsressource umfassen, die das erste PLMN sich mit einem anderen PLMN teilt.

6. Verfahren nach Anspruch 5, wobei
wenn sich ein PLMN in der ersten PLMN-Gruppe eine drahtlose Netzressource der Basisstation teilt, der Ressourcenkonfigurationsbefehl weiterhin eine Basisstationskennung der Basisstation umfasst; oder
wenn sich ein PLMN in der ersten PLMN-Gruppe eine drahtlose Netzressource einer Zelle teilt, der Ressourcenkonfigurationsbefehl weiterhin eine Zellenkennung der Zelle und eine Basisstationskennung einer Basisstation, zu der die Zelle gehört, umfasst.

7. Ressourcenkonfigurationsverfahren, wobei das Ressourcenkonfigurationsverfahren auf Netzteilung basiert, wobei das Verfahren umfasst:
Empfangen (201) durch eine Basisstation eines durch eine Netzvorrichtung übergebenen Ressourcenkonfigurationsbefehls, wobei der Ressourcenkonfigurationsbefehl eine Gruppenkennung von wenigstens einer PLMN-Gruppe (PLMN = Public Land Mobile Network - öffentliches Landmobilfunknetz) und einen Ressourcenanteil einer Konfigurationsressource der wenigstens einen PLMN-Gruppe an einer gesamten drahtlosen Netzressource umfasst, wobei die wenigstens eine PLMN-Gruppe eine erste PLMN-Gruppe umfasst und die erste PLMN-Gruppe wenigstens zwei PLMN umfasst; und
Zuteilen (202) durch die Basisstation einer Ressource zu jedem PLMN gemäß dem Ressourcenanteil der wenigstens einen PLMN-Gruppe;
wobei der Ressourcenkonfigurationsbefehl weiterhin einen Ressourcenanteil einer Konfigurationsressource eines ersten PLMN in der ersten PLMN-Gruppe an der gesamten drahtlosen Netzressource umfasst, und
das Zuteilen durch die Basisstation einer Ressource zu jedem PLMN gemäß dem Ressourcenanteil der wenigstens einen PLMN-Gruppe umfasst:
Zuteilen durch die Basisstation einer Ressource zu dem ersten PLMN gemäß dem Ressourcenanteil des ersten PLMN in der ersten PLMN-Gruppe; und
der Ressourcenkonfigurationsbefehl weiterhin Ressourcenanteile unterschiedlicher Arten von Ressourcen in der Konfigurationsressource des ersten PLMN an der gesamten drahtlosen Netzressource umfasst, wobei die unterschiedlichen Arten von Ressourcen eine Teilungsressource umfassen, die sich das erste PLMN mit einem anderen PLMN teilt.

8. Ressourcenkonfigurationsverfahren nach Anspruch 7, wobei
wenn ein PLMN in der ersten PLMN-Gruppe eine drahtlose Netzressource der Basisstation teilt, der Ressourcenkonfigurationsbefehl weiterhin eine Basisstationskennung der Basisstation umfasst, oder
wenn sich ein PLMN in der ersten PLMN-Gruppe eine drahtlose Netzressource einer Zelle teilt, der Ressourcenkonfigurationsbefehl weiterhin eine Zellenkennung der Zelle und eine Basisstationskennung einer Basisstation enthält, zu der die Zelle gehört.

## Revendications

1. Dispositif de réseau, dans lequel le dispositif de réseau met en oeuvre une configuration de ressource sur la base du partage de réseau, où le dispositif de réseau comprend :
une unité de génération (410), configurée pour générer une commande de configuration de ressource, où la commande de configuration de ressource comprend au moins un groupe de réseaux mobiles terrestres publics, PLMN, et une proportion de ressource d'une ressource de configuration de l'au moins un groupe de PLMN relativement à une ressource de réseau sans fil dans son ensemble, où l'au moins un groupe de PLMN comprend un premier groupe de PLMN, et le premier groupe de PLMN comprend au moins deux PLMN ; et
une unité de délivrance (420), configurée pour délivrer la commande de configuration de ressource générée par l'unité de génération à une station de base ;
où la commande de configuration de ressource comprend en outre une proportion de ressource d'une ressource de configuration d'un premier PLMN dans le premier groupe de PLMN relativement à l'ensemble de la ressource de réseau sans fil ; et
où la commande de configuration de ressource comprend en outre des proportions de ressource de différents types de ressources dans la ressource de configuration du premier PLMN relativement à l'ensemble de la ressource de réseau sans fil, où les différents types de ressources comprennent une ressource de partage que le premier PLMN partage avec un autre PLMN.

2. Dispositif de réseau selon la revendication 1, dans lequel l'unité de génération est configurée pour générer la commande de configuration de ressource, où la commande de configuration de ressource comprend en outre un identifiant de station de base de la station de base lorsqu'un PLMN dans le premier groupe de PLMN partage une ressource de réseau sans fil de la station de base, ou un identifiant de cellule d'une cellule et un identifiant de station de base d'une station de base à laquelle appartient la cellule lorsqu'un PLMN dans le premier groupe de PLMN partage une ressource de réseau sans fil de la cellule.

3. Station de base, dans laquelle la station de base met en oeuvre une configuration de ressource sur la base du partage de réseau, où la station de base comprend :
une unité de réception (610), configurée pour recevoir une commande de configuration de ressource délivrée par un dispositif de réseau, où la commande de configuration de ressource comprend un identifiant de groupe d'au moins un groupe de réseaux mobiles terrestres publics, PLMN, et une proportion de ressource d'une ressource de configuration de l'au moins un groupe de PLMN relativement à une ressource de réseau sans fil dans son ensemble, où l'au moins un groupe de PLMN comprend un premier groupe de PLMN, et le premier groupe de PLMN comprend au moins deux PLMN ; et
une unité d'allocation (620), configurée pour allouer une ressource à chaque PLMN conformément à la proportion de ressource de l'au moins un groupe de PLMN dans la commande de configuration de ressource reçue par l'unité de réception ;
où l'unité de réception est configurée pour recevoir la commande de configuration de ressource, où la commande de configuration de ressource comprend en outre une proportion de ressource d'une ressource de configuration d'un premier PLMN dans le premier groupe de PLMN relativement à l'ensemble de la ressource de réseau sans fil, et
l'unité d'allocation est spécifiquement configurée pour allouer une ressource au premier PLMN conformément à la proportion de ressource du premier PLMN dans le premier groupe de PLMN ; et
l'unité de réception est configurée pour recevoir la commande de configuration de ressource, où la commande de configuration de ressource comprend en outre des proportions de ressource de différents types de ressources dans la ressource de configuration du premier PLMN relativement à l'ensemble de la ressource de réseau sans fil, où les différents types de ressources comprennent une ressource de partage que le premier PLMN partage avec un autre PLMN.

4. Station de base selon la revendication 3, dans laquelle l'unité de réception est configurée pour recevoir la commande de configuration de ressource, où la commande de configuration de ressource comprend en outre un identifiant de station de base de la station de base lorsqu'un PLMN dans le premier groupe de PLMN partage une ressource de réseau sans fil de la station de base, ou un identifiant de cellule d'une cellule et un identifiant de station de base d'une station de base à laquelle appartient la cellule lorsqu'un PLMN dans le premier groupe de PLMN partage une ressource de réseau sans fil de la cellule.

5. Procédé de configuration de ressource, dans lequel le procédé de configuration de ressource est basé sur le partage de réseau, où le procédé comprend les étapes suivantes :
générer (101), par un dispositif de réseau, une commande de configuration de ressource, où la commande de configuration de ressource comprend au moins un groupe de réseaux mobiles terrestres publics, PLMN, et une proportion de ressource d'une ressource de configuration de l'au moins un groupe de PLMN relativement à une ressource de réseau sans fil dans son ensemble, où l'au moins un groupe de PLMN comprend un premier groupe de PLMN, et le premier groupe de PLMN comprend au moins deux PLMN ; et
délivrer (102), par le dispositif de réseau, la commande de configuration de ressource à une station de base ;
où la commande de configuration de ressource comprend en outre une proportion de ressource d'une ressource de configuration d'un premier PLMN dans le premier groupe de PLMN relativement à l'ensemble de la ressource de réseau sans fil ; et
la commande de configuration de ressource comprend en outre des proportions de ressource de différents types de ressources dans la ressource de configuration du premier PLMN relativement à l'ensemble de la ressource de réseau sans fil, où les différents types de ressources comprennent une ressource de partage que le premier PLMN partage avec un autre PLMN.

6. Procédé selon la revendication 5, dans lequel
lorsqu'un PLMN dans le premier groupe de PLMN partage une ressource de réseau sans fil de la station de base, la commande de configuration de ressource comprend en outre un identifiant de station de base de la station de base ; ou
lorsqu'un PLMN dans le premier groupe de PLMN partage une ressource de réseau sans fil d'une cellule, la commande de configuration de ressource comprend en outre un identifiant de cellule de la cellule et un identifiant de station de base d'une station de base à laquelle appartient la cellule.

7. Procédé de configuration de ressource, dans lequel le procédé de configuration de ressource est basé sur le partage de réseau, où le procédé comprend les étapes suivantes :
recevoir (201), par une station de base, une commande de configuration de ressource délivrée par un dispositif de réseau, où la commande de configuration de ressource comprend un identifiant de groupe d'au moins un groupe de réseaux mobiles terrestres publics, PLMN, et une proportion de ressource d'une ressource de configuration de l'au moins un groupe de PLMN relativement à une ressource de réseau sans fil dans son ensemble, où l'au moins un groupe de PLMN comprend un premier groupe de PLMN, et le premier groupe de PLMN comprend au moins deux PLMN ; et
allouer (202) par la station de base, une ressource à chaque PLMN conformément à la proportion de ressource de l'au moins un groupe de PLMN ;
où la commande de configuration de ressource comprend en outre une proportion de ressource d'une ressource de configuration d'un premier PLMN dans le premier groupe de PLMN relativement à l'ensemble de la ressource de réseau sans fil, et
l'allocation, par la station de base, d'une ressource à chaque PLMN conformément à la proportion de ressource de l'au moins un groupe de PLMN comprend l'étape suivante :
allouer, par la station de base, une ressource à chaque PLMN conformément à la proportion de ressource du premier PLMN dans le premier groupe de PLMN ; et
la commande de configuration de ressource comprend en outre des proportions de ressource de différents types de ressources dans la ressource de configuration du premier PLMN relativement à l'ensemble de la ressource de réseau sans fil, où les différents types de ressources comprennent une ressource de partage que le premier PLMN partage avec un autre PLMN.

8. Procédé de configuration de ressource selon la revendication 7, dans lequel lorsqu'un PLMN dans le premier groupe de PLMN partage une ressource de réseau sans fil de la station de base, la commande de configuration de ressource comprend en outre un identifiant de station de base de la station de base ; ou
lorsqu'un PLMN dans le premier groupe de PLMN partage une ressource de réseau sans fil d'une cellule, la commande de configuration de ressource comprend en outre un identifiant de cellule de la cellule et un identifiant de station de base d'une station de base à laquelle appartient la cellule.
